# EUROPÄISCHE PATENTANMELDUNG

(11) **EP 3 318 895 A1**
(43) Veröffentlichungstag der Anmeldung: **09.05.2018**
(21) Anmeldenummer: 17197910.7
(22) Anmeldetag: 24.10.2017
(51) Int. Cl.: G01S 17/42, G01S 17/89, G01S 7/486

(54) **VORRICHTUNG UND VERFAHREN ZUM EMPFANGEN EINES REFLEKTIERTEN LICHTPULSES IN EINEM LIDAR-SYSTEM**

(30) Priorität: 26.10.2016 DE 102016221049
(71) Anmelder: Robert Bosch GmbH, 70442 Stuttgart (DE)
(72) Erfinder: Schnitzer, Reiner, 72762 Reutlingen (DE); Hipp, Tobias, 72379 Hechingen (DE)

(57) **Zusammenfassung**

Die vorliegende Erfindung betrifft eine Vorrichtung zum Empfangen eines reflektierten Lichtpulses in einem Lidar-System, umfassend ein Sensor-Array (1), welches eine Vielzahl einzelner Sensorelemente (2) umfasst, die dazu eingerichtet sind, Lichtpulse zu erfassen, eine Auswahlschaltung (3), welche dazu eingerichtet ist, einige der Sensorelemente (2) auszuwählen und diese zu einem Makropixel (4a, 4b, 4c) zusammenzufassen, und eine Detektionsschaltung (5), welche dazu eingerichtet ist, basierend auf den Lichtpulsen, die von den Sensorelementen (2) des Makropixels (4a, 4b, 4c) erfasst wurden, einen Zeitpunkt zu ermittelt, zu dem ein reflektierter Lichtpuls (10) empfangen wurde. Die vorliegende Erfindung betrifft ferner ein zugehöriges Verfahren zum Empfangen eines reflektierten Lichtpulses in einem Lidar-System, umfassend ein Sensor-Array (1).

## Beschreibung

### Stand der Technik

Die vorliegende Erfindung betrifft eine Vorrichtung und ein Verfahren zum Empfangen eines reflektierten Lichtpulses in einem Lidar-System.

Aktuelle SPAD-basierte Lidar-Sensoren bestehen derzeit aus einem bewegten Mikrospiegel und einem zeilenförmigen oder flächigen SPAD-Array mit oder ohne Makropixelstruktur. Der mit dem System zu messende Abstand zwischen einem Sensor, also dem SPAD-Array, und einem Zielobjekt wird über die Flugzeit zwischen Senden eines Lichtpulses und Empfangen des rückgestreuten Lichts ermittelt. Das Gesichtsfeld des Sensors wird gewöhnlich mit einer Lichtquelle gescannt, typischerweise einem Laser, und nur der jeweils beleuchtete Teil des Detektors ausgewertet. In der Regel wird die Messung mehrfach wiederholt, wobei die gemessenen Flugzeiten jeweils in ein Histogramm einsortiert werden. Die Gegenwart von Störlicht und Detektorrauschen führen dazu, dass zusätzlich zu dem zu messenden Lichtpuls zufällig verteilte Detektionen in das Histogramm einsortiert werden, welche nicht mit dem Lichtpuls korrelieren. Um diese unkorrelierten Detektionen zu unterdrücken, können Makropixelstrukturen eingesetzt werden.

Bei einer Makropixelstruktur werden mehrere physikalische Pixel zu einem logischen Pixel zusammengefasst. Dieses logische Pixel erzeugt nur dann einen Zeitstempel in dem Histogramm, wenn in mehreren physikalischen Pixeln innerhalb eines vordefinierten Zeitfensters eine Detektion stattfindet. So kann ein Makropixel bspw. aus 16 Sensorelementen bestehen, insbesondere 16 SPADs, wobei eine Detektionsschwelle zu drei Sensorelementen festgelegt ist. Wird ein Zeitfenster von einer Nanosekunde betrachtet, so wird nur dann ein Zeitstempel im Histogramm abgelegt, wenn innerhalb einer Nanosekunde in mehr als drei Sensorelementen eine Detektion stattfindet. Unter der Annahme, dass zum Zeitpunkt des Empfangens des rückgestreuten Lichtpulses deutlich mehr Licht für die Dauer des Pulses empfangen wird, werden mit hoher Wahrscheinlichkeit die Detektionsbedingungen des Makropixels erfüllt und ein Zeitstempel wird im Histogramm abgelegt. Die zeitlich zufällig verteilten Detektionen, also Fehldetektionen, können jedoch effektiv unterdrückt werden.

Dabei ist die Zuordnung einzelner Sensorelemente zu einem Makropixel bislang durch eine feste Verschaltung vorgegeben.

### Offenbarung der Erfindung

Die erfindungsgemäße Vorrichtung zum Empfangen eines reflektierten Lichtpulses in einem Lidar-System umfasst ein Sensor-Array, welches eine Vielzahl einzelner Sensorelemente umfasst, die dazu eingerichtet sind, Lichtpulse zu detektieren, eine Auswahlschaltung, welche dazu eingerichtet ist, einige der Sensorelemente auszuwählen und zu einem Makropixel zusammenzufassen, und eine Detektionsschaltung, welche dazu eingerichtet ist, einen Zeitpunkt zu ermitteln, zu dem ein reflektierter Lichtpuls empfangen wurde.

Das erfindungsgemäße Verfahren zum Empfangen eines reflektierten Lichtpulses in einem Lidar-System umfasst ein Bereitstellen eines Sensor-Arrays, welches eine Vielzahl einzelner Sensorelemente umfasst, die dazu eingerichtet sind, Lichtpulse zu erfassen, ein variables Auswählen einiger der Sensorelemente und Zusammenfassen der ausgewählten Sensorelemente zu einem Makropixel, und ein Ermitteln eines Zeitpunktes, zu dem ein reflektierter Lichtpuls empfangen wurde.

Es wird somit eine feste Zuordnung von Sensorelementen, also von physikalischen Pixeln, zu einem Makropixel durch eine flexible Zuordnung ersetzt. Dadurch wird es ermöglicht, bei beliebiger Messposition, die sich bspw. durch eine beliebige Spiegeltrajektorie oder ein beliebiges Messpulsmuster ergibt, die Vorteile eines Makropixels voll auszunutzen. Bei einer fest verdrahteten Lösung muss die Abbildung des zu messenden Punktes auf dem Sensor-Array, also eine Position an welcher der reflektierte Lichtpuls auf das Sensor-Array trifft, im Vorfeld bekannt und konstant sein. Es wird somit eine besonders vorteilhafte Nutzung von Mikrospiegeln mit flexibler Trajektorie sowie beliebiger Messpulsmuster zur Beleuchtung einer Szenerie, also eines Umfeldes des Lidar-Systems, ermöglicht, wobei es insbesondere ermöglicht wird, dass ein reflektierter Lichtpuls an variierenden Stellen des Sensor-Arrays abgebildet wird. Ein Sensor-Array ist ein Detektor. Dabei ist in dem Sensor-Array eine Vielzahl einzelner Sensorelemente auf einer Oberfläche angeordnet. Ein Sensor-Array ist insbesondere eine Pixelmatrix, wobei jedes einzelne Sensorelement jeweils ein Pixel bildet. Dabei kann ein Sensor-Array optional aus lediglich einer Folge von in einer Reihe angeordneten einzelnen Sensorelementen bestehen. Die Sensorelemente sind dazu eingerichtet, zu erfassen, ob ein Lichtpuls vorhanden ist oder nicht vorhanden ist. Ein Sensorelement kann somit einen digitalen Ausgangswert haben. Bspw. den Wert "1", falls Licht detektiert wird und den Wert "0", falls kein Licht detektiert wird.

Die Auswahlschaltung ist dazu eingerichtet, einige der Sensorelemente auszuwählen und zu einem Makropixel zusammenzufassen. Dies bedeutet, dass eine flexible Auswahl erfolgt, welche der Sensorelemente zu dem Makropixel zusammengefasst werden. Dies kann bspw. mittels eines Multiplexers erfolgen. Die Auswahlschaltung ist insbesondere zwischen dem Sensor-Array und der Detektionsschaltung angeordnet. Bei dem Ermitteln eines Zeitpunktes, zu dem ein reflektierter Lichtpuls empfangen wurde, wird insbesondere ein Zeitintervall ermittelt, welches zwischen einem Aussenden des Lichtpulses und einem Empfangen des reflektierten Lichtpulses vergangen ist.

Die Sensorelemente können, insbesondere mithilfe von Multiplexern, flexibel auf die Detektionsschaltung oder Auswerteeinheit geschaltet und zusammengefasst werden. Damit lassen sich für jede beliebige Abbildungssituation die idealen Sensorelemente zu einem Makropixel zusammenfassen. Die Sensorelemente sind insbesondere SPADs, also Single-Photon-Avalanche-Diodes.

Die Unteransprüche zeigen bevorzugte Weiterbildungen der Erfindung.

Bevorzugt ist die Detektionsschaltung dazu eingerichtet, eine variable Detektionsschwelle und/oder ein variables Zeitfenster bereitzustellen, um zu erfassen, ob ein reflektierter Lichtpuls empfangen wurde. Die Detektionsschwelle ist dabei insbesondere eine Mindestanzahl von Sensorelementen, welche einen Lichtpuls detektieren. Das Zeitfenster ist ein Zeitraum, in welchem ein erwarteter reflektierter Lichtpuls empfangen werden muss. Auf diese Weise können die Kriterien für eine Detektion innerhalb des Makropixels auf bestimmte Umgebungsbedingungen angepasst werden. Die flexible Zuordnung einzelner Sensorelemente zu einem Makropixel erlaubt es ebenfalls, die Größe des Makropixels anzupassen. So kann z. B. im Randbereich einer Optik eines Lidar-Systems, wo eine schlechtere Abbildung den reflektierten Lichtpuls, bzw. dessen Abbildung auf das Sensor-Array vergrößert, das Makropixel daran angepasst werden.

Bevorzugt ist die Auswahlschaltung dazu eingerichtet, basierend auf zumindest einem Eingangsparameter eine Vorhersage zu treffen, auf welche der Sensorelemente der reflektierte Lichtpuls trifft, und die entsprechenden Sensorelemente zu dem Makropixel zusammenzufassen. Die entsprechenden Sensorelemente sind die Sensorelemente, die einen Bereich des Sensor-Arrays abdecken, über den sich der reflektierte Lichtpuls erstreckt, wenn dieser auf das Sensor-Array trifft. Auf diese Weise werden Fehlauslösungen vermieden und das Signal- zu Rauschverhalten verbessert. Störeinflüsse können also besonders effektiv gefiltert werden.

Auch ist es vorteilhaft, wenn der Eingangsparameter ein Signal ist, welches eine Stellung eines Mikrospiegels des Lidar-Systems beschreibt. Die Stellung des Mikrospiegels des Lidar-Systems hat einen besonders starken Einfluss auf den Punkt, an dem ein reflektierter Lichtpuls auf das Sensor-Array trifft. Dadurch kann mittels einer aktuellen Stellung des Mikrospiegels besonders effizient vorhergesagt werden, wo der reflektierte Lichtpuls auf das Sensor-Array trifft. Wird dieser Wert als Eingangsparameter genutzt, kann eine besonders genaue Vorhersage ausgeführt werden, auf welche Sensorelemente der reflektierte Lichtpuls trifft und somit kann das Makropixel besonders effizient ausgewählt werden.

Auch ist es vorteilhaft, wenn der Eingangsparameter ein Signal ist, welches eine Position beschreibt, an welcher der reflektierte Lichtpuls zuvor auf das Sensor-Array getroffen ist. Dabei ist es insbesondere vorteilhaft, wenn auf eine vorherige Auswahl von Sensorelementen zurückgegriffen wird, also auf ein zuvor zusammengefasstes Makropixel zurückgegriffen wird. Betrachtet man eine Position des reflektierten Lichtpulses auf dem Sensor-Array über einen zeitlichen Verlauf, so wird dieser nahezu stetig über das Sensor-Array wandern, wobei typischerweise kaum Sprünge in der Position des Lichtpulses auftreten. Somit kann dessen vorherige Position auf dem Sensor-Array und somit die Lage des zuvor ausgewählten Makropixels einen effizienten Hinweis darauf geben, welche Sensorelemente zu dem Makropixel zusammenzufassen sind. Somit kann eine besonders effiziente Vorhersage ausgeführt werden.

Ferner ist es vorteilhaft, wenn der Eingangsparameter eine Trajektorie ist, die eine Bewegungsbahn beschreibt, auf welcher der Lichtpuls in zeitlicher Abfolge auftritt. Der Lichtpuls wandert typischerweise stetig über das Sensor-Array, wobei sich dessen Bewegungsbahn bei jedem Oszillationsvorgang eines Markrospiegels des Lidar-Systems widerholt. Dabei ergibt sich insbesondere aus einer Reihe von Lichtpulsen, die nacheinander auf das Sensor-Array trifft, eine Bewegungsbahn. Diese Bewegungsbahn ist eine sich wiederholende Bewegungsbahn. Die Bewegungsbahn kann als eine Trajektorie abgespeichert werden. Dies erfolgt vorteilhaft in einem beliebigen Scanvorgang, welcher insbesondere einen vollen Schwenk des Mikrospiegels umfasst. Die Trajektorie kann somit während einem Betrieb des Lidar-Systems kontinuierlich neu erfasst werden und für einen folgenden Schwenk des Mikrospiegels genutzt werden. Alternativ wird diese einmalig bereitgestellt.

Ferner ist es vorteilhaft, wenn der Eingangsparameter ein Größenwert ist, der eine Ausdehnung des reflektierten Lichtpulses auf dem Sensor-Array beschreibt. Ebenso wie eine Position, an welcher der reflektierte Lichtpuls auf das Sensor-Array trifft, ist auch eine Ausdehnung des reflektierten Lichtpulses variabel. Dabei ist es besonders vorteilhaft, die Ausdehnung des reflektierten Lichtpulses basierend auf einem vorherigen Scandurchgang zu speichern, oder diese in Abhängigkeit von einer Position des Lichtpulses auf dem Sensor-Array zu speichern. Auf diese Weise kann eine besonders effiziente Vorhersage einer Anzahl von Sensorelementen erfolgen, die zu dem Makropixel zusammengefasst werden.

Auch ist es vorteilhaft, wenn eine Anzahl der Sensorelemente, die zum dem Makropixel zusammengefasst wird, von einer Lage des Makropixels auf dem Sensor-Array abhängig ist. So werden insbesondere an einem Rand des Sensor-Arrays mehrere Sensorelemente zu dem Makropixel zusammengefasst als in einem zentralen Bereich des Sensor-Arrays. Auf diese Weise können spezielle Eigenschaften einer Optik des Lidar-Systems ausgeglichen werden.

Ferner ist es vorteilhaft, wenn die Sensorelemente, die zu dem Makropixel zusammengefasst werden, aneinander angrenzende Sensorelemente sind. Da es unwahrscheinlich ist, dass der reflektierte Lichtpuls durch die Optik des Lidar-Systems aufgespalten wird und als eine Vielzahl von Reflexpunkten auf das Sensor-Array trifft, kann durch diese Annahme eine besonders effiziente Auswahl des Makropixels erfolgen.

Ferner ist es vorteilhaft, wenn die Detektionsschaltung dazu eingerichtet ist, mehrere Lichtpulse zu messen um das Makropixel zu optimieren, wobei die Auswahlschaltung dazu eingerichtet ist, während dem Erfassen der Lichtpulse unterschiedliche Sensorelemente auszuwählen und zu dem Makropixel zusammenzufassen. Dies bedeutet in anderen Worten, dass mehrere Lichtpulse, welche von einem Lidar-System ausgesandt wurden, mittels mehrerer aufeinander folgender Messungen der Sensorelemente des Makropixels erfasst werden um darüber das Makropixel in der Struktur zu optimieren. So wäre es insbesondere möglich, dass bei einer ersten Messung alle Sensorelemente des Sensor-Arrays zu dem Makropixel zusammengefasst werden und bei einer zweiten Messung lediglich die Sensorelemente des Sensor-Arrays zu dem Makropixel zusammengefasst werden, welche bei der ersten Messung einen Lichtpuls detektiert haben. Dies ist insbesondere vorteilhaft, da somit auf eine Vorhersage verzichtet werden kann, wo der Lichtpuls auf das Sensor-Array trifft.

Des Weiteren ist ein Lidar-System vorteilhaft, welches die erfindungsgemäße Vorrichtung zum empfangen eines reflektierten Lichtpulses umfasst. Dabei ist es ferner vorteilhaft, wenn das Lidar-System einen Mikrospiegel umfasst, welcher dazu eingerichtet ist einen von einer Lichtquelle des Lidar-Systems erzeugten Lichtpuls in ein Umfeld des Lidar-Systems zu lenken. Der Mikrospiegel ist dazu bevorzugt beweglich gelagert.

### Kurze Beschreibung der Zeichnungen

Nachfolgend werden Ausführungsbeispiele der Erfindung unter Bezugnahme auf die begleitende Zeichnungen im Detail beschrieben. In der Zeichnung ist:
- Figur 1: eine exemplarisch dargestellte Vorrichtung zum Empfangen eines reflektierten Lichtpulses in einem Lidar-System gemäß einer ersten Ausführung der Erfindung,
- Figur 2: ein Sensor-Array gemäß der ersten Ausführungsform der Erfindung, auf welchem eine beispielhafte Trajektorie dargestellt ist, und
- Figur 3: ein Ablaufdiagram für ein Verfahren zum Empfangen eines reflektierten Lichtpulses in einem Lidar-System gemäß der ersten Ausführung der Erfindung.

### Ausführungsformen der Erfindung

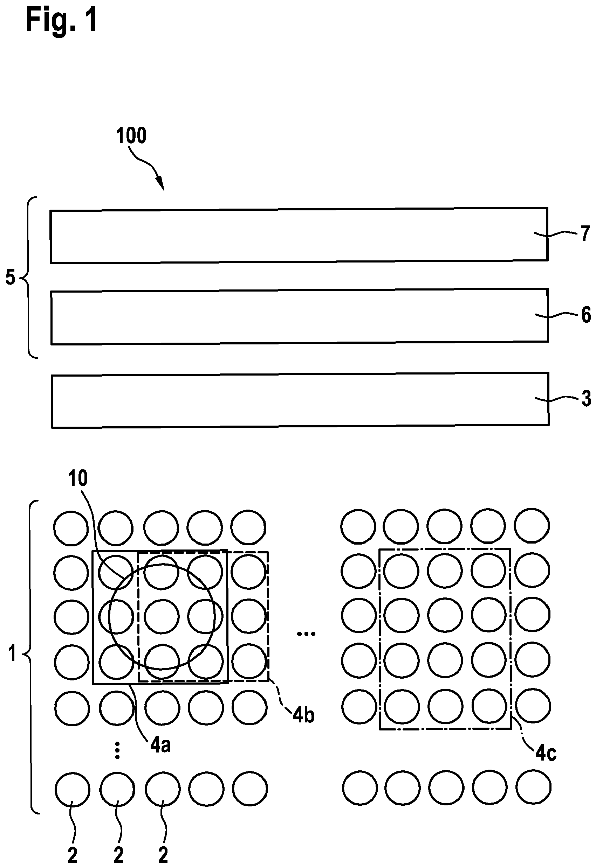

Figur 1 beschreibt eine Vorrichtung 100 zum Empfangen eines reflektierten Lichtpulses in einem Lidar-System gemäß einer ersten Ausführungsform der Erfindung. Das Lidar-System umfasst ein Sensor-Array 1, welcher eine Vielzahl einzelner Sensorelemente 2 umfasst.

Die erfindungsgemäße Vorrichtung 100 zum Empfangen eines reflektierten Lichtpulses in einem Lidar-System wird in dieser ersten Ausführungsform der Erfindung von einem Lidar-System umfasst. Das Lidar-System umfasst einen Laser, welcher über einen oszillierenden Mikrospiegel in eine Umgebung des Lidar-Systems abgestrahlt wird. Von dem Laser werden in zeitlichen Abständen Lichtpulse ausgesandt. Diese werden in der Umgebung des Lidar-Systems reflektiert und über eine Optik auf das Sensor-Array 1 gelenkt. Somit trifft der Laser, nachdem er reflektiert wurde, als reflektierter Lichtpuls auf das Sensor-Array 1. Dabei erstreckt der reflektierte Lichtpuls sich jedoch nicht über das gesamte Sensor-Array 1, sondern nur über einen gewissen Bereich der Oberfläche und somit über eine gewisse Anzahl der einzelnen Sensorelemente 2 des Sensor-Arrays 1. Da der Laser über den Mikrospiegel, welcher bei einem Betrieb des Lidar-Systems oszilliert, in wechselnde Richtungen in das Umfeld des Lidar-Systems ausgestrahlt wird, treffen auch die reflektierten Lichtpulse an unterschiedlichen Stellen auf das Sensor-Array 1. Ein Lichtpuls ist ein Laserstrahl, welcher für eine begrenzte Zeit ausgestrahlt wird.

Das Sensor-Array 1 ist mit einer Auswahlschaltung 3 gekoppelt. Jedes der Sensorelemente 2 ist in dieser ersten Ausführungsform eine Fotodiode. Jedes der Sensorelemente 2 ist dazu eingerichtet, Lichtpulse zu erfassen. Das bedeutet, dass jedes der Sensorelemente 2 ein vorgegebenes Sensorsignal ausgibt, wenn an einer Sensorfläche des Sensorelementes 2 ein Lichtpuls vorliegt. Die einzelnen Sensorelemente 2 sind zu einer Pixelmatrix zusammengeschaltet und bilden so das Sensor-Array 1. Auf die einzelnen Sensorelemente 2 kann insbesondere in zeitlicher Abfolge zugegriffen werden, wie dies auch bei einer LCD-Matrix der Fall ist. Alternativ sind die einzelnen Sensorelemente 2 mittels jeweils einer Signalleitung mit der Auswahlschaltung 3 gekoppelt.

Die Sensorelemente 2 des Sensor-Arrays 1 sind in einer X-Richtung und in einer Y-Richtung des Sensor-Arrays 1 angeordnet.

Die Auswahlschaltung 3 ist dazu eingerichtet, einige der Sensorelemente 2 auszuwählen und zu einem Makropixel 4a, 4b, 4c zusammenzufassen. Das bedeutet, dass die Auswahlschaltung 3 auf eine bestimmte Auswahl der Sensorelemente 2 zugreift, um deren Sensorsignale zu erfassen. Die Sensorelemente 2, auf welche die Auswahlschaltung 3 dabei zugreift, werden gemeinsam als Makropixel 4a, 4b, 4c bezeichnet. Ein Makropixel 4a, 4b, 4c ist somit eine Untergruppe von Sensorelementen 2 aus der gesamten Vielzahl von Sensorelementen 2 des Sensor-Arrays 1.

Die Auswahlschaltung 3 umfasst dabei eine Logik, auf Basis derer die Auswahl der Sensorelemente 2 erfolgt, welche das Makropixel 4a, 4b, 4c bilden.

In dieser ersten Ausführungsform ist die Auswahlschaltung 3 dazu eingerichtet, basierend auf zumindest einem Eingangsparameter eine Vorhersage zu treffen, auf welche der Sensorelemente 2 der reflektierte Lichtpuls trifft. Die entsprechenden Sensorelemente 2, von denen auf Basis der Vorhersage angenommen wird, dass der reflektierte Lichtpuls 10 auf diese trifft, werden von der Auswahlschaltung 3 ausgelesen und somit zu dem Makropixel 4a, 4b, 4c zusammengefasst. Die übrigen Sensorelemente werden nicht berücksichtigt und können optional auch zeitweise abgeschaltet werden. Der Begriff "zusammenfassen" ist dabei derart zu verstehen, dass die Sensorsignale der ausgewählten Sensorelemente 2 gemeinsam weitergegeben werden.

Da der Mikrospiegel des Lidar-Systems konstant oszilliert, also beständig in Bewegung ist, wandert der reflektierte Lichtpuls 10 während seiner Pulsdauer über das Sensor-Array 1. Da die Dauer eines Lichtpulses 10 im Vergleich zu einer Bewegung des Mikrospiegels jedoch sehr gering ist, kommt es nur zu einer sehr geringen Bewegung des reflektierten Lichtpulses 10 über das Sensor-Array 1. Betrachtet man eine Vielzahl von reflektierten Lichtpulsen, die in zeitlicher Abfolge aufeinander ausgesandt wurden, so treffen die einzelnen reflektierten Lichtpulse 10 an wechselnden Stellen auf das Sensor-Array 1. Auch dies wird im Sinne dieser Beschreibung als eine Bewegung des reflektierten Lichtpulses 10 auf den Sensor-Array 1 verstanden.

Da ein reflektierter Lichtpuls 10 somit nicht zu jeder Zeit auf die gleichen Sensorelemente 2 des Sensor-Arrays 1 reflektiert wird, ist die Auswahlschaltung 3 dazu eingerichtet, eine Vorhersage zu treffen, auf welche der Sensorelemente 2 der reflektierte Lichtpuls 10 trifft. Die Vorhersage, auf welche der Sensorelemente 2 der reflektierte Lichtpuls 10 trifft, erfolgt basierend auf einem Eingangsparameter.

Der Eingangsparameter ist bspw. ein Signal, welches eine Stellung des Mikrospiegels des Lidar-Systems beschreibt. Dazu ist es nicht zwingend notwendig, die Stellung des Mikrospiegels des Lidar-Systems zu jedem Zeitpunkt zu erfassen. So kann bspw. eine Nullstellung des Mikrospiegels erfasst werden, und dessen weitere Position im zeitlichen Verlauf aus einer Zeitdifferenz seit einem Passieren der Nullstellung errechnet werden. Abhängig von der Position des Mikrospiegels werden bestimmte Sensorelemente 2 der gesamten Vielzahl von Sensorelementen 2 des Sensor-Arrays 1 ausgewählt und zu dem Makropixel 4a, 4b, 4c zusammengefasst.

Alternativ oder zusätzlich ist der Eingangsparameter ein Signal, welcher eine Position beschreibt, an welcher der reflektierte Lichtpuls 10 zuvor auf das Sensor-Array 1 getroffen ist. Eine Position, an welcher der reflektierte Lichtpuls zuvor auf das Sensor-Array 1 getroffen ist, ist eine Position, die dadurch bestimmt ist, dass die an dieser Position gelegenen Sensorelemente 2 zu einem Zeitpunkt, die vor der Auswahl der Sensorelemente durch die Auswahlschaltung 3 liegt, den reflektierten Lichtpuls 10 erfasst haben.

In Figur 1 ist ein beispielhaftes erstes Makropixel 4a dargestellt, welches von der Auswahlschaltung 3 zu einem ersten Zeitpunkt zusammengefasst wird. Dieses erste Makropixel 4a umfasst neun der Sensorelemente 2. Das erste Makropixel 4a erstreckt sich über drei Sensorelemente in X-Richtung und über drei Sensorelemente in Y-Richtung des Sensor-Arrays 1. Das erste Makropixel 4a ist somit ein 3 x 3-Makropixel.

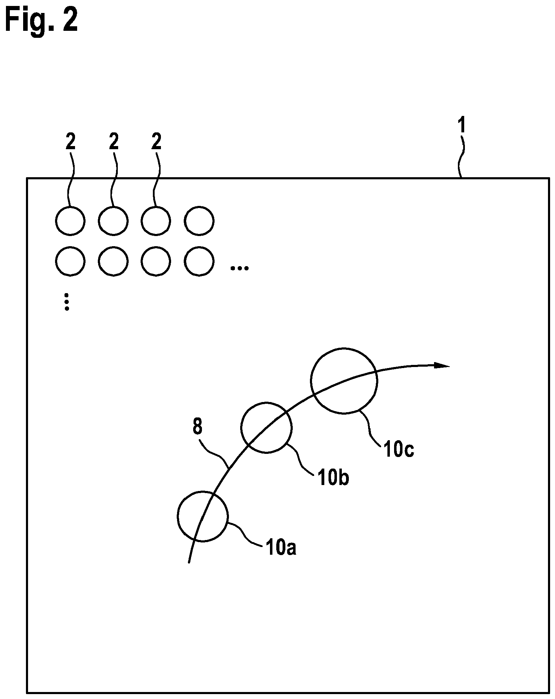

Zu einem zweiten Zeitpunkt wird das Makropixel durch eine andere Auswahl von Sensorelementen 2 gebildet. Dies ist in Figur 2 beispielhaft durch ein zweites Makropixel 4b dargestellt. Das zweite Makropixel 4b ist ebenfalls ein 3 x 3-Makropixel. Somit umfasst das zweite Makropixel 4b ebenfalls neun Sensorelemente 2. Das zweite Makropixel 4b ist gegenüber dem ersten Makropixel 4a um ein Sensorelement 2 auf dem Sensor-Array in X-Richtung nach rechts verschoben. Diese Verschiebung wird durch die Auswahlschaltung 3 vorhergesagt. Wandert der Lichtpuls 10, der in Figur 1 beispielhaft für den ersten Zeitpunkt dargestellt ist, nach rechts, so wird dies durch die Auswahlschaltung 3 vorhergesagt, und die entsprechenden Sensorelemente 2 werden für den auf den ersten Zeitpunkt folgenden zweiten Zeitpunkt zu dem zweiten Makropixel 4b zusammengefasst. Somit werden jeweils nur die Sensorelemente 2 des Sensor-Arrays 1 zu dem Makropixel 4a, 4b, 4c zusammengefasst, auf welche der Laser als reflektierter Lichtpuls 10 tatsächlich zurückgeworfen wird. Eine Unterscheidung einzelner reflektierter Lichtpulse, welche nacheinander von dem Laser ausgesandt wurden, erfolgt in dieser ersten Ausführungsform durch die Detektionsschaltung 5.

Die Auswahl der Sensorelemente 2 des ersten Makropixels 4a bzw. eine Auswahl der Sensorelemente 2 des zweiten Makropixels 4b erfolgt dabei bspw. basierend auf einer Tabelle, in welcher jeweils eine zugehörige Stellung des Mikrospiegels und/oder eine zugehörige Position, an welche der Lichtpuls 10 zuvor auf das Sensor-Array 1 getroffen ist, hinterlegt ist.

In Figur 1 ist zudem ein drittes Makropixel 4c dargestellt, welches zu einem dritten Zeitpunkt von der Auswahlschaltung 3 ausgewählt wird. Es ist ersichtlich, dass das dritte Makropixel 4c zwölf der Sensorelemente 2 umfasst. Das dritte Makropixel 4c ist somit größer als das erste und das zweite Makropixel 4a, 4b. Das dritte Makropixel 4c ist ein 3 x 4-Makropixel. Ein Makropixel kann eine beliebige Größe aufweisen, bspw. 4 x 4 oder 6 x 6 Sensorelemente.

Der Eingangsparameter ist alternativ oder zusätzlich eine Trajektorie 8, die eine Bewegungsbahn beschreibt, auf welcher der Lichtpuls 10 in zeitlicher Abfolge auftritt. Die Bewegungsbahn beschreibt somit, wie der Lichtpuls 10 über das Sensor-Array 1 wandert. Eine beispielhafte Trajektorie 8 ist in Figur 2 dargestellt. Eine solche Trajektorie 8 kann bspw. bei einem ersten Schwenk des Mikrospiegels erfasst und gespeichert werden. Die Trajektorie 8 ist eine Bewegungsbahn über das Sensor-Array 1. Diese kann entweder als Bewegungsbahn hinterlegt werden, oder eine Reihe von vorgespeicherten Sets von Makropixeln sein. So könnte die Trajektorie 8 bspw. eine Liste sein, wobei in jedem Listeneintrag bestimmte Sensorelemente 2 eingetragen sind, die das Makropixel 4a, 4b, 4c zu einem zugehörigen Zeitpunkt beschreiben. Dabei ist es vorteilhaft, wenn zugleich für jedes der Makropixel 4a, 4b, 4c ein Größenwert hinterlegt ist, der eine Ausdehnung des reflektierten Lichtpulses auf dem Sensor-Array 1 beschreibt. So ist in Figur 2 der Lichtpuls 10 für einen ersten Zeitpunkt als ein erster Lichtpuls 10a dargestellt, für den zweiten Zeitpunkt als zweiter Lichtpuls 10b und für den dritten Zeitpunkt als dritter Lichtpuls 10c dargestellt. Es ist ersichtlich, dass sich eine Fläche, auf welche der reflektierte Lichtpuls 10 auf dem Sensor-Array 1 auftrifft und über die sich der reflektierte Lichtpuls 10 auf dem Sensor-Array 1 erstreckt, sich über ihren zeitlichen Verlauf ändern kann. Dies wird vorteilhaft zusammen mit der Trajektorie 8, welche den zeitlichen Verlauf des Lichtpulses 10 über das Sensor-Array 1 beschreibt, gespeichert. Der Größenwert ist dabei insbesondere eine Anzahl von Sensorelementen 2, welche das Makropixel 4a, 4b, 4c bilden. Die Anzahl der Sensorelemente 2, die zu dem Makropixel 4a, 4b, 4c zusammengefasst wird, ist von einer Lage des Makropixels 4a, 4b, 4c auf dem Sensor-Array 1 abhängig. So erkennt die Auswahlschaltung 3, ob die Sensorelemente 2, welche zu dem Makropixel 4a, 4b, 4c zusammengefasst werden, in einem Randbereich des Sensor-Arrays 1 liegen. Ist dies der Fall, so werden mehrere Sensorelemente 2 zu dem Makropixel 4a, 4b, 4c zusammengefasst, als wenn dies nicht der Fall ist.

In dieser ersten Ausführungsform sind die Sensorelemente 2, die zu einem Makropixel 4a, 4b, 4c zusammengefasst werden, aneinander angrenzende Sensorelemente 2. In alternativen Ausführungsformen ist dies jedoch nicht der Fall. So besteht bspw. die Möglichkeit, falls die Optik des Lidar-Systems zu einer Aufspaltung des reflektierten Lichtpulses 10 führt, dieser also an zwei nicht angrenzenden Flächen auf das Sensor-Array 1 trifft, oder mehrere Lichtpulse gleichzeitig zu empfangen sind, dass Sensorelemente 2 zu dem Makropixel 4a, 4b, 4c zusammengefasst werden, die nicht nebeneinander auf der Matrix des Sensor-Arrays 1 liegen. Es wird somit eine freie Auswahl einzelner Sensorelemente 2 des Sensor-Arrays 1 zu dem Makropixel 4a, 4b, 4c ermöglicht.

Die Sensorsignale der Sensorelemente 2 des Makropixels 4a, 4b, 4c werden von der Auswahlschaltung 3 an eine Detektionsschaltung 5 übertragen. Durch diese wird ein Zeitpunkt ermittelt, zu dem der reflektierte Lichtpuls 10 empfangen wurde. Dazu umfasst die Detektionsschaltung 5 eine Makropixellogik 6. Durch diese wird erfasst, ob zumindest eine vorgegebene Anzahl von Sensorelementen 2 des Makropixels 4a, 4b, 4c einen Sensorsignal ausgeben, das auf eine Belichtung des zugehörigen Sensorelementes 2 hindeutet. Es wird somit ein Schwellenwert geschaffen. Dieser Schwellenwert ist bevorzugt von einer Anzahl der Sensorelemente 2 abhängig, die das Makropixels 4a, 4b, 4c gerade umfasst. Diese Betrachtung erfolgt bevorzugt über einen bestimmten vorgegebenen Zeitraum. Erst wenn mehr als die vorgegebene Anzahl von Sensorelementen 2 über den vorgegebenen Zeitraum einen Lichtpuls detektieren, die auf eine Belichtung des Sensorelementes 2 hindeutet, wird festgestellt, dass der reflektierte Lichtpuls 10 auf das Sensor-Array 1 getroffen ist. Es wird ein Zeitpunkt hinterlegt, zu dem dieser Lichtpuls durch die Sensorelemente 2 des jeweiligen Makropixels 4a, 4b, 4c erfasst wurde. Eine Zeitdifferenz, zwischen diesem Zeitpunkt und einem Aussenden des Lasers, welcher den reflektierten Lichtpuls 10 verursacht hat, wird in ein Histogramm eingetragen. Dies erfolgt durch eine Histogrammlogik, die mit der Makropixellogik 7 gekoppelt ist. Durch eine Vielzahl von Messungen, die in engen zeitlichen Abständen erfolgt, wird somit ein Histogramm erstellt, welches eine höchste Wahrscheinlichkeit ausgibt, zu welchem Zeitpunkt der reflektierte Lichtpuls 10 tatsächlich auf das Sensor-Array 1 getroffen ist.

Dabei ist es möglich, dass die Auswahlschaltung 3 zugleich mehrere Makropixel erstellt, also bspw. einen Flächenbereich, auf welchen der reflektierte Lichtpuls 10 trifft, was bspw. mittels der Vorhersage errechnet wird, in mehrere Makropixel 4a, 4b, 4c unterteilt, die zeitgleich existieren. Die Sensorsignale der unterschiedlichen Makropixel 4a, 4b, 4c werden zugleich parallel von der Detektionsschaltung 5 verarbeitet und die darauf basierenden Ergebnisse zusammen in das Histogramm eingetragen.

Optional ist die Detektionsschaltung 5 dazu eingerichtet, mehrere Lichtpulse 10 mittels den Sensorelementen 2 des Makropixels 4a, 4b, 4c zu ermitteln, wobei die Auswahlschaltung 3 dazu eingerichtet ist, während des Erfassens der Lichtpulse unterschiedliche Sensorelemente auszuwählen und zu dem Makropixel 4a, 4b, 4c zusammenzufassen. Dabei werden bspw. zunächst einige der Sensorelemente 2 zu einem Markopixel 4a, 4b, 4c zusammengefasst. Wird durch die Detektionsschaltung 5 festgestellt, dass der reflektierte Lichtpuls 10 durch das Makropixel 4a, 4b, 4c erkannt wurde, so wird geprüft, durch welche der Sensorelemente 2 des Makropixels 4a, 4b, 4c der reflektierte Lichtpuls 10 tatsächlich erfasst wurde. Wird dabei festgestellt, dass einige der einzelnen Sensorelemente 2 des jeweiligen Makropixels 4a, 4b, 4c nicht durch den reflektierten Lichtpuls 10 belichtet wurden, so werden diese Sensorelemente 2 während dem Erfassen des Lichtpulses 10 abgeschaltet und tragen somit nicht mehr zu den Sensorwerten des Makropixels 4a, 4b, 4c bei. Mit anderen Worten bedeutet dies, dass das Makropixel 4a, 4b, 4c verkleinert wird. In ähnlicher Weise kann erkannt werden, dass an das Makropixel 4a, 4b, 4c angrenzende Sensorelemente belichtet wurden. Diese können den Sensorelementen 2 des jeweils aktuellen Makropixels 4a, 4b, 4c bei einer folgenden Messung hinzugefügt werden. Es wird somit eine Vorrichtung 100 zum Empfangen eines reflektierten Lichtpulses geschaffen, die sich selbstständig an eine Ausdehnung des reflektierten Lichtpulses 10 auf das Sensor-Array 1 anpasst.

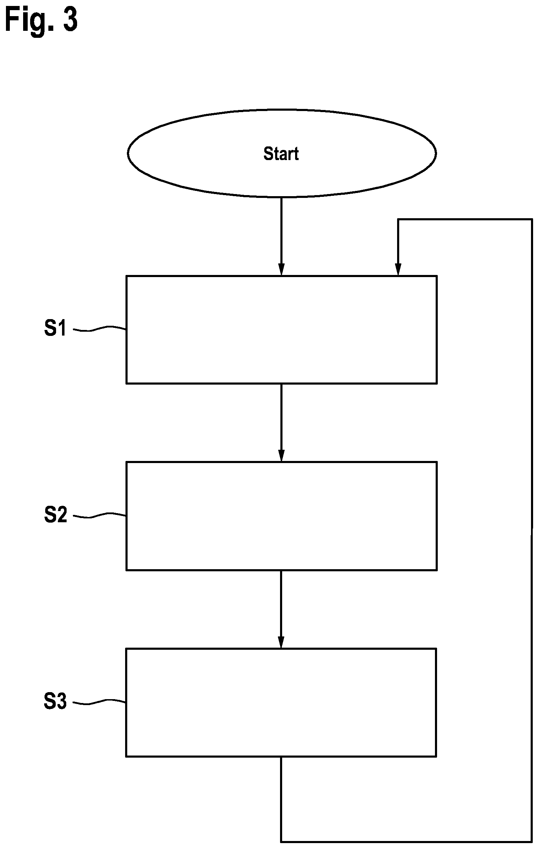

Figur 3 zeigt ein Ablaufdiagramm für ein Verfahren zum Empfangen eines reflektierten Lichtpulses in einem Lidar-System. Das dargestellte Verfahren wird durch die zuvor beschriebene Vorrichtung ausgeführt. In dem Verfahren erfolgt zunächst in einem ersten Schritt S1 ein Bereitstellen eines Sensor-Arrays 1, welches eine Vielzahl einzelner Sensorelemente 2 umfasst, die dazu eingerichtet sind, Lichtpulse zu erfassen. Dies erfolgt durch die erfindungsgemäße Vorrichtung, wenn das Sensor-Array 1 in Betrieb genommen wird.

In Folge auf den ersten Schritt S1 wird ein zweiter Schritt S2 ausgeführt. Darin erfolgt ein variables Auswählen einiger der Sensorelemente 2 und ein flexibles Zusammenfassen der ausgewählten Sensorelemente 2 zu dem Makropixel 4a, 4b, 4c. In der erfindungsgemäßen Vorrichtung geschieht dies durch die Auswahlschaltung 3. Flexibel bedeutet dabei, dass bei aufeinanderfolgenden Durchläufen des Verfahrens unterschiedliche Pixel zu dem Makropixel 4a, 4b, 4c zusammengefasst werden.

Wurden die Sensorelemente 2 zu dem Makropixel 4a, 4b, 4c zusammengefasst, so erfolgt in einem dritten Schritt S3, der in Folge auf dem zweiten Schritt S2 ausgeführt wird, ein Ermitteln eines Zeitpunktes, zu dem ein reflektierter Lichtpuls 10 empfangen wurde. Dies erfolgt basierend auf den Lichtpulsen, die von den Sensorelementen 2 des Makropixels 4a, 4b, 4c als Sensorwerte erfasst wurden. Dies geschieht in der erfindungsgemäßen Vorrichtung mittels der Detektionsschaltung 5. Nach dem Ausführen des dritten Schrittes S3 wird erneut der erste Schritt S1 ausgeführt. Es ergibt sich, dass das erfindungsgemäße Verfahren in einer Schleife ausgeführt wird.

Nebst obenstehender Offenbarung wird explizit auf die Offenbarung der Figuren 1 bis 3 verwiesen.

## Patentansprüche

1. Vorrichtung zum Empfangen eines reflektierten Lichtpulses in einem Lidar-System, umfassend:
- ein Sensor-Array (1), welches eine Vielzahl einzelner Sensorelemente (2) umfasst, die dazu eingerichtet sind, Lichtpulse zu erfassen;
- eine Auswahlschaltung (3), welche dazu eingerichtet ist, einige der Sensorelemente (2) auszuwählen und diese zu einem Makropixel (4a, 4b, 4c) zusammenzufassen; und
- eine Detektionsschaltung (5), welche dazu eingerichtet ist, basierend auf den Lichtpulsen, die von den Sensorelementen (2) des Makropixels (4a, 4b, 4c) erfasst wurden, einen Zeitpunkt zu ermittelt, zu dem ein reflektierter Lichtpuls (10) empfangen wurde.

2. Vorrichtung gemäß Anspruch 1, **dadurch gekennzeichnet, dass** die Detektionsschaltung (5) dazu eingerichtet ist, eine variable Detektionsschwelle und/oder ein variables Zeitfenster bereitzustellen, um zu erfassen, ob ein reflektierter Lichtpuls (10) empfangen wurde.

3. Vorrichtung gemäß einem der voranstehenden Ansprüche, **dadurch gekennzeichnet, dass** die Auswahlschaltung (3) dazu eingerichtet ist, basierend auf zumindest einem Eingangsparameter eine Vorhersage zu treffen, auf welche der Sensorelemente (2) der reflektierte Lichtpuls (10) trifft, und die entsprechenden Sensorelemente zu dem Makropixel (4a, 4b, 4c) zusammenzufassen.

4. Vorrichtung gemäß Anspruch 3, **dadurch gekennzeichnet, dass** der Eingangsparameter ein Signal ist, welches eine Stellung eines Makrospielgels des Lidar-Systems beschreibt, und/oder der Eingangsparameter ein Signal ist, welches eine Position beschreibt, an welcher der reflektierte Lichtpuls (10) zuvor auf das Sensor-Array (1) getroffen ist.

5. Vorrichtung gemäß einem der Ansprüche 3 bis 4, **dadurch gekennzeichnet, dass** der Eingangsparameter eine Trajektorie (8) ist, die eine Bewegungsbahn beschreibt, auf welcher der Lichtpuls (10) in zeitlicher Abfolge auftritt.

6. Vorrichtung gemäß einem der Ansprüche 3 bis 5, **dadurch gekennzeichnet, dass** der Eingangsparameter ein Größenwert ist, der eine Ausdehnung des reflektierten Lichtpulses (10) auf dem Sensorarray (1) beschreibt.

7. Vorrichtung gemäß einem der voranstehenden Ansprüche, **dadurch gekennzeichnet, dass** eine Anzahl der Sensorelemente (2), die zu dem Makropixel (4a, 4b, 4c) zusammengefasst wird, von einer Lage des Makropixels (4a, 4b, 4c) auf dem Sensor-Array (1) abhängig ist.

8. Vorrichtung gemäß einem der voranstehenden Ansprüche, **dadurch gekennzeichnet, dass** die Sensorelemente (2), die zu dem Makropixel (4a, 4b, 4c) zusammengefasst werden, aneinander angrenzende Sensorelemente (2) sind.

9. Vorrichtung gemäß einem der voranstehenden Ansprüche, **dadurch gekennzeichnet, dass**
die Detektionsschaltung (5) dazu eingerichtet ist, dass über einzelne Messungen das Makropixel (4a, 4b,4c) optimiert wird, wobei insbesondere bei einer zweiten Messung lediglich die Sensorelemente (2) zum Makropixel zusammengefasst werden, welche bei der ersten Messung einen Lichtpuls detektiert haben.

10. Verfahren zum Empfangen eines reflektierten Lichtpulses in einem Lidar-System, umfassend:
- Bereitstellen eines Sensor-Arrays (1), welches eine Vielzahl einzelner Sensorelemente (2) umfasst, die dazu eingerichtet sind, Lichtpulse zu erfassen;
- variables Auswählen einiger der Sensorelemente (2) und Zusammenfassen der ausgewählten Sensorelemente zu einem Makropixel (4a, 4b, 4c); und
- Ermitteln eines Zeitpunktes, zu dem ein reflektierter Lichtpuls (10) empfangen wurde, basierend auf den Lichtpulsen, die von den Sensorelementen (2) des Makropixels (4a, 4b, 4c) erfasst wurden.
